# FASCICULE DE BREVET EUROPEEN

(11) **EP 1 056 605 B1**
(45) Date de publication et mention de la délivrance du brevet: **12.05.2004**
(21) Numéro de dépôt: 99906228.4
(22) Date de dépôt: 12.02.1999
(51) Int. Cl.: B60C 9/28, B60C 9/20

(54) **ARMATURE DE SOMMET POUR PNEUMATIQUE**
REIFEN-VERSTÄRKUNGSGÜRTEL
TYRE TOP REINFORCEMENT PLY

(30) Priorité: 20.02.1998 FR 9802172
(43) Date de publication de la demande: 06.12.2000
(73) Titulaire: COMPAGNIE GENERALE DES ETABLISSEMENTS MICHELIN-MICHELIN & CIE, 63040 Clermont-Ferrand Cédex (FR)
(72) Inventeur: GIRAUD, Jacques, F-63110 Beaumont (FR)
(74) Mandataire: Diernaz, Christian
(86) Numéro de dépôt international: PCT/EP1999/000908
(87) Numéro de publication internationale: WO 1999/042306

(56) Documents cités:
- EP-A- 0 416 893
- FR-A- 2 419 185
- US-A- 4 498 514
- US-A- 4 669 520
- US-A- 4 934 429

## Description

L'invention concerne un pneumatique dont le rapport de forme H/S est au plus égal à 0,80, et plus particulièrement un pneumatique de type "Poids-Lourds" ou de "Génie Civil".

Un tel pneumatique, destiné généralement à porter de lourdes charges, comprend une armature de carcasse radiale, et une armature de sommet composée d'au moins deux nappes de sommet de travail, formées d'éléments de renforcement inextensibles, croisés d'une nappe à la suivante et faisant avec la direction circonférentielle des angles égaux ou inégaux, mais compris généralement entre 10° et 45°.

Lorsqu'on augmente la largeur axiale S de tels pneumatiques sans augmenter les diamètres à l'équateur et des sièges sur jante, c'est-à-dire en conservant la hauteur H du pneumatique sur jante, on constate que l'aire de contact avec un sol plan et horizontal change considérablement de forme pour un rapport H/S inférieur à 0,65, ceci malgré l'utilisation d'une armature de sommet de travail résistant aux tensions qui lui sont appliquées.

L'aire de contact s'élargit dans le sens axial, mais se raccourcit dans le sens longitudinal du pneumatique. Le raccourcissement dans le sens longitudinal comporte un rétrécissement de plus en plus prononcé dans la zone équatoriale, rétrécissement pouvant aller jusqu'à provoquer la réunion des bords avant et arrière de l'aire de contact, puis la division de ladite aire en deux aires symétriques par rapport à l'axe longitudinal de la bande de roulement.

Malgré les avantages que présentent les bandes de roulement larges et les rapports de forme H/S inférieurs à l'unité, plus particulièrement en pneumatiques pour véhicules de Tourisme, la forme inhabituelle de l'aire de contact d'un pneumatique de rapport de forme inférieur à 0,80 présente un grand nombre d'inconvénients dans les cas de pneumatiques pour véhicules lourds, du fait d'une irrégularité dans le sens axial des déformations radiales de l'ensemble armature de carcasse-armature de sommet de travail sous l'effet des contraintes dues à la pression de gonflage.

Lesdits inconvénients sont de plusieurs sortes, et concernent aussi bien l'endurance des armatures de renforcement que la résistance de la bande de roulement et du pneumatique aux agressions du sol (usure, dégradations, perforations, chocs, etc.).

Afin de remédier au raccourcissement de l'aire de contact dans le sens longitudinal et au manque d'endurance de l'armature de sommet, le brevet FR 2 419 185 préconise de disposer entre l'armature de carcasse et la nappe de sommet de travail radialement intérieure, dans deux zones distinctes du plan équatorial, deux blocs limiteurs, constitués chacun de deux nappes superposées de câbles inextensibles, croisés d'une nappe à la suivante en faisant avec la direction circonférentielle des angles opposés, au plus égaux en valeur absolue à la moitié du plus petit angle utilisé dans les nappes de travail, et différents de 0°. Si la solution, préconisée dans ledit brevet, permet en outre une amélioration de l'endurance du pneumatique, la résistance à la séparation entre nappes de travail au niveau de leurs extrémités étant accrue, et les nappes des blocs limiteurs n'étant pas sujettes à ladite séparation, par contre elle procure un frettage trop important entraînant le risque de mise en compression des câbles de nappes de travail lors de la mise à plat.

En vue d'améliorer l'usure du pneumatique à H/S faible, ainsi que la résistance à la séparation des nappes de sommet, le brevet US 4 934 429 revendique, au contraire du précédent, l'emploi de câbles métalliques, extensibles et dont l'orientation par rapport à la direction circonférentielle peut être nulle, dans une armature additionnelle, composée d'au moins une nappe à deux portions de part et d'autre du plan équatorial, l'extensibilité des câbles étant choisie en fonction des modules d'extension désirés respectivement pour la(les) nappe(s) de renforcement et les nappes de sommet.

La présence d'armatures additionnelles d'éléments de renforcement circonférentiels ou très peu inclinés par rapport à la direction circonférentielle ne semble pas être la meilleure solution pour uniformiser axialement, en même temps que les rigidités d'armature de sommet, les pressions de contact avec le sol et/ou les glissements entre la bande de roulement et ledit sol.

Le brevet US-A-4 498 514 montre un pneumatique qui correspond au préambule de la revendication 1.

L'invention propose une autre solution afin d'atteindre l'objectif d'uniformisation précitée, solution relative à la constitution et la structure de l'armature de sommet de travail.

Le pneumatique, conforme à l'invention, de rapport de forme inférieur à 0,80, comprenant une armature de carcasse radiale composée d'au moins une nappe d'éléments de renforcement métalliques inextensibles, et surmontée radialement d'une armature de sommet de travail, composée d'au moins deux nappes de sommet de travail axialement continues et formées d'éléments de renforcement métalliques inextensibles, parallèles entre eux dans chaque nappe et croisés d'une nappe à la suivante en faisant avec la direction circonférentielle des angles α, α' compris entre 10° et 45°, est caractérisé en ce que les deux nappes de travail ont des largeurs axiales respectivement comprises dans les intervalles 0,65 S₀-0,80 S₀ et 0,35 S₀-0,45 S₀, S₀ étant la largeur axiale maximale de la ligne moyenne de l'armature de carcasse , l'armature de sommet de travail étant complétée par la présence de deux demi-nappes, composées d'éléments métalliques inextensibles faisant avec la direction circonférentielle un angle β inférieur au plus petit des angles α et α' d'au moins 2° et de direction opposée à la direction de l'angle α de la nappe de travail axialement continue la plus large, les dites demi-nappes étant disposées de part et d'autre du plan équatorial avec des largeurs axiales comprises entre 0,22 S₀ et 0, 35 S₀ et telles que leurs extrémités axialement intérieures soient distantes du plan équatorial d'une quantité égale à la demi-largeur de la nappe de travail la moins large diminuée d'une quantité au moins égale à 0,05 S₀.

De manière préférentielle, les deux nappes axialement continues et formées des éléments orientés avec des angles α, α' sont radialement les plus proches de l'armature de carcasse, et, dans ce contexte, la nappe la moins large est préférentiellement la plus proche de la nappe radialement extérieure de l'armature de carcasse, ladite nappe la moins large ayant des éléments de renforcement orientés avec l'angle dit - α' ou à gauche.

Il est avantageux d'adjoindre, radialement à l'extérieur de l'armature de travail ainsi définie ci-dessus et comprenant deux nappes axialement continues d'éléments de renforcement et deux premières demi-nappes, deux autres demi-nappes d'éléments métalliques inextensibles, parallèles entre eux dans chaque demi-nappe et croisés avec les éléments des deux demi-nappes radialement inférieures en faisant avec la direction circonférentielle un angle γ , supérieur d'une part au plus grand des angles α et α' des nappes axialement continues et d'autre part supérieur à l'angle β des éléments de renforcement des deux premières demi-nappes d'au moins 10°.

Les extrémités axialement intérieures des dites deux demi-nappes d'éléments orientés avec ledit angle γ sont distantes du plan équatorial d'une valeur égale à la demi-largeur de la nappe de travail axialement continue la plus large diminuée d'une quantité au moins égale à 0,05 S₀.

Les extrémités axialement extérieures des dites demi-nappes d'éléments orientés à l'angle γ peuvent être disposées axialement à l'extérieur des extrémités axialement extérieures des deux demi-nappes à angle β, mais seront préférentiellement distantes du plan équatorial d'une quantité au plus égale à la distance séparant les extrémités axialement extérieures des nappes à angle β dudit plan.

Les caractéristiques de l'invention seront mieux comprises à l'aide de la description qui suit et qui se réfère au dessin, illustrant à titre non limitatif des exemples d'exécution, et sur lequel
- la figure 1 représente schématiquement, vu en section méridienne, une armature de sommet conforme à l'invention,
- la figure 2 représente schématiquement, vu en section méridienne, une variante d'armature de sommet toujours conforme à l'invention.

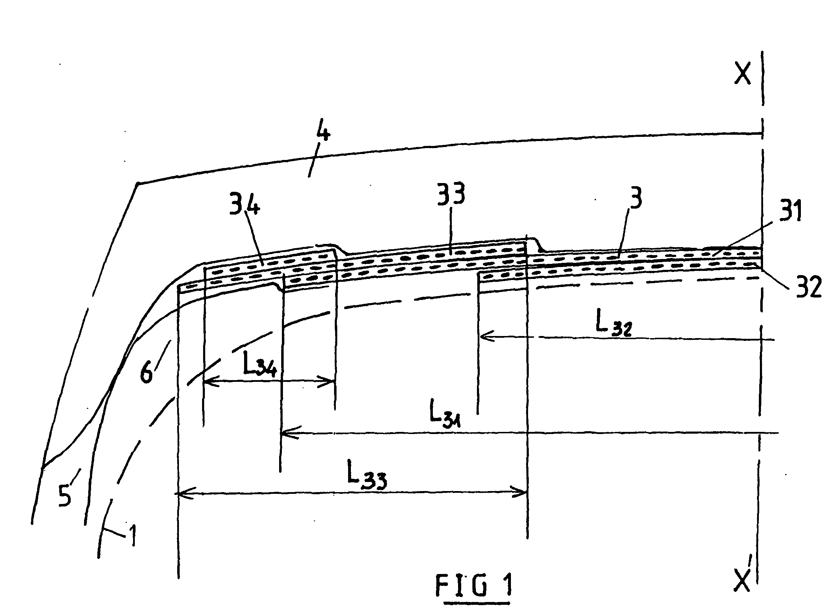

Le pneumatique P (figure 1) est un pneumatique dont le rapport de forme H/S est égal à 0,50, H étant la hauteur du pneumatique sur jante et S la largeur axiale maximale du pneumatique, lorsque ce dernier est monté sur sa jante de service et gonflé à sa pression recommandée.

Le pneumatique P comprend une armature de carcasse radiale composée d'une nappe (1) de câbles métalliques inextensibles, ancrée dans chaque bourrelet à au moins une tringle (non montrée). La nappe (1) est surmontée radialement à l'extérieur d'une armature de sommet de travail (3) et d'une ou plusieurs nappes de protection (non montrées). L'armature de travail comprend en premier lieu deux nappes de travail (31) et (32) axialement continues et de largeurs L₃₁ et L₃₂, la nappe la moins large (32) étant, dans le cas décrit, radialement la plus proche de l'armature de carcasse (1). Les largeurs L₃₁ et L₃₂ sont respectivement égales à 0,72 S₀ et 0,41 S₀. Lesdites deux nappes (31) et (32) sont formés d'éléments de renforcement métalliques inextensibles, parallèles entre eux dans chaque nappe et croisés d'une nappe à la suivante en faisant avec la direction circonférentielle du pneumatique un angle de 22°. Radialement à l'extérieur, sur les bords de la nappe (31) la plus large sont disposées deux demi-nappes (33), formées des mêmes éléments métalliques inextensibles que ceux qui forment les nappes (31) et (32), les dits éléments étant parallèles entre eux dans chaque demi-nappe et croisés avec les éléments de la nappe axialement continue la plus large (31) en faisant avec la direction circonférentielle un angle β, inférieur à α et égal à 18°. La largeur axiale L₃₃ de chaque demi-nappe (33) est égale à 0,29 S₀, et l'extrémité axialement intérieure de la demi-nappe (33) est située à une distance axiale du plan équatorial XX', telle qu'il y ait recouvrement entre le bord axialement intérieur de ladite demi-nappe (33) et le bord axialement extérieur de la deuxième nappe axialement continue (32), la moins large et radialement à l'intérieur, le bord de la demi-nappe (33) étant radialement au-dessus du bord de ladite nappe continue (32) et la largeur dudit recouvrement étant égal à 0,06 S₀.

Deux autres demi-nappes (34) complètent l'armature de travail (3). Elles sont disposées radialement à l'extérieur des deux premières demi-nappes (33) et sont formées des mêmes câbles que ceux des nappes déjà existantes (31, 32, 33), parallèles entre eux dans chaque demi-nappe (34) et croisés avec les câbles de la première demi-nappe (33) radialement adjacente en formant avec la direction circonférentielle un angle de 34°. L'extrémité axialement intérieure d'une deuxième demi-nappe (34) est distante du plan équatorial XX' d'une quantité égale à 0,30 S₀, ce qui permet un recouvrement de 0,06 S₀ avec le bord axialement extérieur de la nappe axialement continue la plus large (31). L'extrémité axialement extérieure de chaque deuxième demi-nappe (34) est distante du plan équatorial d'une quantité au plus égale à la distance séparant l'extrémité axialement extérieure de chaque première demi-nappe (33) dudit plan, et dans le cas étudié, l'extrémité extérieure de la demi-nappe (34) est axialement à l'intérieur de l'extrémité de la première demi-nappe (33) d'une quantité égale à 0,01 S₀. La largeur axiale de chaque deuxième demi-nappe (34) est alors égale à 0,125 S₀.

En allant du plan équatorial XX' vers l'extrémité axialement extérieure de l'armature de travail (3), qui est, dans le cas décrit, l'extrémité axialement extérieure de la première demi-nappe (33), on peut diviser l'armature de sommet (3) en plusieurs zones :
a) une première zone, du plan équatorial à l'extrémité axialement intérieure de la première demi-nappe (33), ayant une largeur axiale égale à 0,145 S₀ avec deux nappes à éléments de renforcement croisés (- 22°, + 22°) d'une nappe (32) à la suivante (31),
b) une deuxième zone, de l'extrémité axialement intérieure de la demi-nappe (33) à l'extrémité axialement extérieure de la nappe axialement continue la moins large (32), ayant une largeur axiale égale à 0,06 S₀, avec trois nappes à éléments de renforcement présentant la configuration angulaire (- 22°, + 22°, - 18°)
c) une troisième zone, de l'extrémité axialement extérieure de la nappe axialement continue la moins large (32) à l'extrémité axialement intérieure de la deuxième demi-nappe (34), avec deux nappes à éléments de renforcement avec la configuration (+ 22°, - 18°), et ayant une largeur égale à 0,095 S₀,
d) une quatrième zone, de l'extrémité axialement intérieure de la deuxième demi-nappe (34) à l'extrémité axialement extérieure de la nappe axialement continue la plus large (31), ayant une largeur égale à 0,06 S₀ et avec trois nappes d'éléments de renforcement avec la configuration (+ 22°, - 18°, + 34°),
e) une cinquième zone, de l'extrémité axialement extérieure de la nappe axialement continue la plus large (31) à l'extrémité axialement extérieure de la deuxième demi-nappe (34), ayant une largeur égale à 0,065 S₀, dans le cas décrit, et composée d'éléments de renforcement avec une configuration angulaire (- 18°, + 34°),
f) et enfin une sixième zone où seule est présent le bord axialement extérieur de la première demi-nappe (33), ayant une largeur de 0,01 S₀.

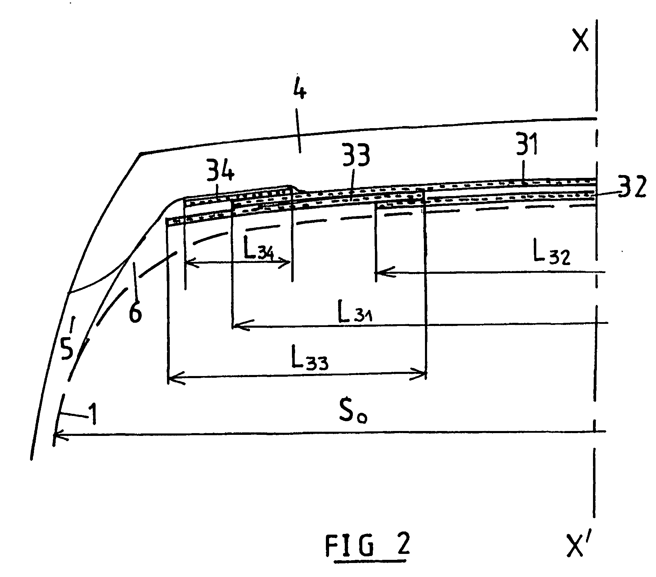

Sur la figure 2 est montrée une variante de l'armature de sommet (3) conforme à l'invention. Ladite armature diffère de la précédente, montrée sur la figure 1, uniquement par la disposition radiale des nappes et demi-nappes de travail, accompagnée des modifications de valeurs et d'orientation angulaires nécessaires pour avoir les mêmes zones de rigidité que précédemment.

Ainsi, la nappe axialement continue la moins large (32) reste la nappe de travail la plus proche de l'armature de carcasse (1), et ses éléments de renforcement sont orientés à l'angle - 20°. Sur les bords de ladite nappe (32), sont disposées les premières demi-nappes (33), l'extrémité axialement intérieure de chaque demi-nappe (33) étant située à une distance du plan équatorial XX' tel qu'il y ait recouvrement du bord axialement extérieur de la nappe axialement continue (32) la moins large et la plus proche de l'armature de carcasse, ledit recouvrement ayant une largeur de 0,06 S₀. Radialement au-dessus des demi-nappes (33), est directement posée la nappe axialement continue (31) la plus large et dont les éléments de renforcement sont orientés à l'angle + 20°. Les éléments de renforcement de chaque demi-nappe (33) sont croisés avec les éléments de la nappe axialement continue (31) axialement la plus large, et orientés dans la même direction que les éléments de la nappe la moins large (32), en faisant avec la direction circonférentielles un angle de - 18°. De la même manière que précédemment, deux demi-nappes (34) complètent l'armature de sommet de travail(3), les éléments de renforcement desdites nappes étant orientés à + 34° pour être croisés avec les éléments des demi-nappes (33).

Les largeurs axiales des nappes de travail du deuxième exemple de réalisation décrit sont les mêmes que les largeurs conformes à l'exemple montré sur la figure 1. Il en est de même des largeurs des zones de différentes rigidités circonférentielles décrites dans le premier exemple. Ainsi, les des largeurs deux nappes (31) et (32), axialement continues, L₃₁ et L₃₂ sont respectivement égales à 0,72 S₀ et 0,41 S₀ , et les largeurs des deux paires de demi-nappes sont égales à 0,29 S₀ et 0, 125 S₀. Les largeurs de zones, telles que définies précédemment, sont toujours de 0,145 S₀, 0,06 S₀, 0,095S₀, 0,06 S₀, 0,065 S₀ et 0,01 S₀.

Quelle que soit l'architecture d'armature de travail utilisé, ladite armature (3) est complétée radialement à l'extérieur, et comme connu en soi, par une armature de protection, qui peut être composée soit d'au moins une nappe et préférentiellement d'au moins deux nappes d'éléments de renforcement métalliques dits élastiques, comme connu en soi, soit d'un enroulement d'éléments métalliques en acier ondulés ou en zigzag sur au moins une couche.

Le pneumatique P est enfin complété, comme connu en soi, par une bande de roulement (4), des flancs (5), alors que l'armature de carcasse (1) est séparée des bords de l'armature de sommet (3) par des profilés de mélange caoutchouteux (6) de forme sensiblement triangulaire, les extrémités des nappes de travail de ladite armature de sommet (3) étant aussi séparées entre elles soit par des profilés de caoutchouc de forme triangulaire, soit par des couches de bordure caoutchouteuses plates.

Les pneumatiques, tels que décrits et montrés sur les figures 1 et 2, ont été comparés à un pneumatique témoin de même dimension comportant une armature de sommet de travail usuelle, c'est-à-dire formée de deux nappes de travail axialement continues et dont les largeurs axiales sont très voisines des distances séparant les extrémités axialement extérieures des nappes (33) et (34) des deux pneumatiques testés.

Il ressort des roulages d'endurance sous dérive effectués (roulages sur dumpers de Génie-Civil équipés des mêmes pneus à l'avant et à l'arrière et sur une piste de chantier agrémentée de nombreux virages) que les solutions décrites et proposées améliorent nettement la résistance à la dégradation mécanique de l'armature de sommet par séparation entre nappes, le pneumatique témoin réalisant en moyenne 250 h de roulage (moyenne avant-arrière) alors que les pneumatiques d'essai ont réalisé 720 h en moyenne, avec un avantage certain pour le pneumatique correspondant à la figure 1 et au passage correspondant de la description, si l'on considère visuellement les dommages obtenus. Ladite amélioration a été obtenue sans dégradation des performances relatives à la perforation de l'armature de sommet par un objet agressif, et sans dégradation du comportement du véhicule sur piste.

## Revendications

1. Pneumatique, de rapport de forme inférieur à 0,80, comprenant une armature de carcasse radiale composée d'au moins une nappe(1) d'éléments de renforcement métalliques inextensibles, et surmontée radialement d'une armature de sommet de travail (3), composée d'au moins deux nappes de sommet de travail (31, 32), axialement continues et formées d'éléments de renforcement métalliques inextensibles, parallèles entre eux dans chaque nappe et croisés d'une nappe à la suivante en faisant avec la direction circonférentielle des angles α, α' compris entre 10° et 45°, **caractérisé en ce que** les deux nappes de travail (31) et (32) ont des largeurs axiales L₃₁ et L₃₂ respectivement comprises dans les intervalles 0,65 S₀-0,80 S₀ et 0,35 S₀-0,45 S₀, S₀ étant la largeur axiale maximale de la ligne moyenne de l'armature de carcasse (1), l'armature de sommet de travail (3) étant complétée par la présence d'au moins deux demi-nappes (33), composées d'éléments métalliques inextensibles et faisant avec la direction circonférentielle un angle β, inférieur au plus petit des angles α et α' d'au moins 2° et de direction opposée à la direction de l'angle α de la nappe de travail axialement continue la plus large (31), les dites demi-nappes (33) étant disposées de part et d'autre du plan équatorial XX' avec des largeurs axiales L₃₃ comprises entre 0,22 S₀ et 0, 35 S₀, et telles que leurs extrémités axialement intérieures soient distantes du plan équatorial XX' d'une quantité égale à la demi-largeur de la nappe de travail la moins large (32) diminuée d'une quantité au moins égale à 0,05 S₀.

2. Pneumatique selon la revendication 1, **caractérisé en ce que** les deux nappes axialement continues (31) et (32), formées des éléments orientés avec des angles α, α', sont radialement les plus proches de l'armature de carcasse (1), la nappe la moins large (32) étant la plus proche de la nappe radialement extérieure de l'armature de carcasse(1) et ladite nappe la moins large (32) ayant des éléments de renforcement orientés avec l'angle dit - α'.

3. Pneumatique selon l'une des revendications 1 ou 2, **caractérisé en ce que** l'armature de travail (3) est complétée, radialement à l'extérieur des deux premières demi-nappes (33), par deux autres demi-nappes (34) d'éléments métalliques inextensibles, parallèles entre eux dans chaque demi-nappe (34) et croisés avec les éléments des deux demi-nappes (33) radialement inférieures en faisant avec la direction circonférentielle un angle γ , supérieur d'une part au plus grand des angles α et α' des nappes axialement continues (31, 32), et d'autre part supérieur à l'angle β des éléments de renforcement des deux premières demi-nappes (33) d'au moins 10°.

4. Pneumatique selon la revendication 3, **caractérisé en ce que** les extrémités axialement intérieures des dites deux demi-nappes d'éléments (34) orientés avec ledit angle γ sont distantes du plan équatorial XX' d'une valeur égale à la demi-largeur L₃₁ de la nappe de travail axialement continue la plus large (31) diminuée d'une quantité au moins égale à 0,05 S₀.

5. Pneumatique selon la revendication 4, **caractérisé en ce que** les extrémités axialement extérieures des dites demi-nappes d'éléments (34) orientés à l'angle γ sont distantes du plan équatorial d'une quantité au plus égale à la distance séparant dudit plan les extrémités axialement extérieures des demi-nappes (33) d'éléments à angle β.

## Patentansprüche

1. Reifen mit einem Formverhältnis von weniger als 0,80, der eine radiale Karkassenbewehrung aufweist, die aus mindestens einer Lage (1) aus metallischen, undehnbaren Verstärkungselementen zusammengesetzt ist und radial über der eine Scheitel-Arbeitsbewehrung (3) angebracht ist, die aus mindestens zwei Scheitel-Arbeitslagen (31, 32) zusammengesetzt ist, die axial durchgehend sind und aus metallischen, undehnbaren Verstärkungselementen gebildet sind, die zueinander in jeder Lage parallel verlaufen und von einer Lage zur folgenden überkreuz laufen, wobei sie zur Umfangsrichtung Winkel α, α' bilden, die zwischen 10° und 45° liegen, **dadurch gekennzeichnet, daß** die beiden Arbeitslagen (31) und (32) axiale Breiten L₃₁ und L₃₂ haben, die jeweils in den Intervallen von 0,65 S₀ - 0,80 S₀ und 0,35 S₀ - 0,45 S₀ liegen, wobei S₀ die maximale Axialbreite der Mittellinie der Karkassenbewehrung (1) ist, die Scheitel-Arbeitsbewehrung (3) durch die Anwesenheit mindestens zweier Halblagen (33) vervollständigt wird, die aus metallischen, undehnbaren Elementen zusammengesetzt sind, die zur Umfangsrichtung einen Winkel β bilden, der um mindestens 2° kleiner als der kleinere der Winkel α und α', und der eine Richtung aufweist, die der Richtung des Winkels α der größten, axial durchgehenden Arbeitslage (31) entgegengesetzt ist, und die genannten Halblagen (33) beiderseits der Äquatorialebene XX' angeordnet sind, mit axialen Breiten L₃₃, die zwischen 0,22 S₀ und 0,35 S₀ liegen, und so, daß ihre axial inneren Enden von der Äquatorialebene XX' um einen Betrag beabstandet sind, der gleich ist der halben Breite der am wenigsten breiten Arbeitslage (32), verringert um einen Betrag von mindestens 0,05 S₀.

2. Reifen nach Anspruch 1, **dadurch gekennzeichnet, daß** die beiden, axial durchgehenden Lagen (31) und (32), die aus Elementen gebildet sind, die unter den Winkeln α, α' ausgerichtet sind, radial der Karkassenbewehrung (1) am nächsten liegen, wobei die am wenigsten breite Lage (32) der radial äußeren Lage der Karkassenbewehrung (1) nächstgelegen ist und die genannte, am wenigsten breite Lage (32) Verstärkungselemente aufweist, die in einem Winkel ausgerichtet sind, der - α' genannt ist.

3. Reifen nach einem der Ansprüche 1 oder 2, **dadurch gekennzeichnet, daß** die Arbeitsbewehrung (3) radial auf der Außenseite der beiden ersten Halblagen (33) durch zwei andere Halblagen (34) aus metallischen, undehnbaren Elementen vervollständigt ist, die untereinander in jeder Halblage (34) parallel sind und mit den Elementen der beiden, radial unteren Halblagen (33) überkreuz laufen, wobei sie zur Umfangsrichtung einen Winkel γ bilden, der einerseits größer als der größere der Winkel α und α' der axial durchgehenden Lagen (31, 32) ist und andererseits grösser als der Winkel β der Verstärkungselemente der beiden ersten Halblagen (33) ist, und zwar um mindestens 10°.

4. Reifen nach Anspruch 3, **dadurch gekennzeichnet, daß** die axial inneren Enden der genannten, beiden Halblagen aus Elementen (34), die unter dem genannten Winkel γ ausgerichtet sind, von der Äquatorialebene XX' um einen Wert beabstandet sind, der gleich der halben Breite L₃₁ der breitesten, axial durchgehenden Arbeitslage (31) ist, verringert um einen Wert, der mindestens gleich 0,05 S₀ ist.

5. Reifen nach Anspruch 4, **dadurch gekennzeichnet, daß** die axial äußeren Enden der genannten Halblagen aus Elementen (34), die unter dem Winkel γ ausgerichtet sind, von der Äquatorialebene um einen Wert beabstandet sind, der höchstens gleich dem Abstand ist, der die axial äußeren Enden der Halblagen (33) aus Elementen mit dem Winkel β von der genannten Ebene trennt.

## Claims

1. Tyre, with a form ratio smaller than 0.80, comprising a radial carcass reinforcement that consists of at least one ply (1) of non-extensible metallic reinforcing elements, which is radially covered by a working crown reinforcement (3) consisting of at least two working crown plies (31, 32), which are axially continuous and are formed of non-extensible metallic reinforcing elements parallel to one another within each ply and crossed over from one ply to the next, making angles α, α' of between 10° and 45° relative to the circumferential direction,
**characterised in that**
the two working plies (31) and (32) have axial widths L₃₁ and L₃₂ respectively within the ranges 0.65S₀ to 0.80S₀ and 0.35S₀ to 0.45S₀, where S₀ is the maximum axial width of the median line of the carcass reinforcement (1), the working crown reinforcement (3) being completed by the presence of at least two half-plies (33) consisting of non-extensible metallic elements which make an angle β with the circumferential direction, β being smaller than the lesser of the angles α and α', at least 2°, and in the direction opposite to the direction of the angle α of the wider axially continuous working ply (31), the said half-plies (33) being positioned on either side of the equatorial plane XX' with axial widths L₃₃ ranging between 0.22S₀ and 0.35S₀, and such that their axially internal edges are a distance away from the equatorial plane XX' equal to half the width of the narrower working ply (32) less an amount equal to at least 0.05S₀.

2. Tyre according to Claim 1,
**characterised in that**
the two axially continuous plies (31) and (32), formed of elements orientated at angles α, α' are radially closest to the carcass reinforcement (1), the narrower ply (32) being closer to the radially outermost ply of the carcass reinforcement (1) and the said narrower ply (32) having reinforcing elements orientated at an angle denoted as -α'.

3. Tyre according to either of Claims 1 or 2,
**characterised in that**
the working reinforcement (3) is completed, radially on the outside of the two first half-plies (33), by two other half-plies (34) made of non-extensible metallic elements parallel to one another within each half-ply (34) and crossing the elements of the two half-plies (33) radially underneath them, making an angle γ with the circumferential direction which is on the one hand greater than the larger of the angles α and α' of the axially continuous plies (31, 32) and on the other hand also greater than the angle β of the reinforcing elements of the two first half-plies (33) by at least 10°.

4. Tyre according to Claim 3,
**characterised in that**
the axially internal edges of the said two half-plies of elements (34) orientated at the said angle γ are a distance away from the equatorial plane XX' equal to half the width L₃₁ of the wider axially continuous working ply (31) less an amount at least equal to 0.05S₀.

5. Tyre according to Claim 4,
**characterised in that**
the axially external edges of the said half-plies of elements (34) orientated at the angle γ are a distance away from the equatorial plane at most equal to the distance separating the axially exterior edges of the half-plies (33) of elements orientated at angle β from the said plane.
